## Europäisches Patentamt

(19) **European Patent Office**

**Office européen des brevets**

(11) Publication number: **0 227 255**
**B1**

---

(12) # EUROPEAN PATENT SPECIFICATION

(45) Date of publication of the patent specification:
**14.11.90**

(21) Application number: **86308275.6**

(22) Date of filing: **24.10.86**

(51) Int. Cl.⁵: **A62C 3/08,** A62C 27/00,
B64D 25/00

---

(54) Aircraft fire - emergency method and apparatus and aircraft equipped therewith.

---

(30) Priority: **24.10.85 GB 8526240**

(43) Date of publication of application:
**01.07.87 Bulletin 87/27**

(45) Publication of the grant of the patent:
**14.11.90 Bulletin 90/46**

(84) Designated Contracting States:
**DE FR GB IT NL SE**

(56) References cited:
**EP-A- 0 083 179**
**DE-B- 2 526 932**
**GB-A- 2 125 534**
**GB-A- 2 150 278**
**US-A- 4 311 198**

(73) Proprietor: **The British Petroleum Company p.l.c.,**
**Britannic House Moor Lane, London EC2Y 9BU(GB)**

(72) Inventor: **Birch, Neville Hampton, 12 Prince Rupert**
**Mews, Lichfield Staffordshire WS13 7DD(GB)**

(74) Representative: **Baverstock, Michael George Douglas et**
**al, BOULT, WADE & TENNANT 27 Furnival Street,**
**London, EC4A 1PQ(GB)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The present invention relates to aircraft fire-emergency method and apparatus and in particular to a method and apparatus for preventing or reducing injury and loss of life of passengers and crew of aircraft and preventing, reducing or delaying damage to the aircraft, in an emergency such as that following an accident to the aircraft and involving risk from fuel fire.

The term aircraft as used in this specification includes both civil and military aircraft, including aeroplanes and helicopters, and also includes hovercraft.

The risk to life as a result of fire in an aircraft accident which some or all of the occupants of the aircraft might otherwise have survived, has for some while been recognised as a serious problem, which has become all the more acute with larger numbers of passengers being capable of being carried in modern aircraft, many of the passengers being elderly people, children, invalids, or others who may not be well able to act quickly themselves to extricate themselves from the aircraft, assuming this is possible.

A great deal of research has been carried out over many years relating to the survivability of the passengers and crew in fire related aviation accidents. Most of such accidents in fact occur either at airports or in the vicinity of airports, and therefore within reach of fire and rescue services. However, even when such services are immediately at hand, one of the most important factors affecting the survivability of passengers and crew within the aircraft is the very small amount of time available before fire, smoke, fumes and toxic gases can render the environment of the aircraft cabin unsurvivable.

Most of the research effort hitherto towards reducing the problems concerned could be described as of a passive nature, being directed, for example, to the use of constructional and cabin materials within the aircraft which are more fire resistant than hitherto, and has been directed to increasing, albeit to only a minor degree, the short length of time which may be available for evacuating the aircraft.

The concept of combating the problems from within the aircraft, rather than relying on the actions of the emergency services outside the aircraft does not, up to the present, appear to have been seriously considered in practical terms and it is one of the aspects of the present invention to enable this to be done.

Specific hazards facing passengers and crew in event of fire are inhalation of toxic and/or hot gases; direct exposure to fire; the presence of smoke, which both reduces visibility and incapacitates if inhaled; flashover of the fire to within the cabin due to accumulation of combustible pyrolysis products within the cabin; and the possibility of further fuel explosions due to spread of the fire or heat to hitherto-unaffected fuel tanks.

The concept of the present invention is to actively combat these hazards from within the aircraft itself, the aircraft having been specially adapted to enable this to be done. The invention enables the survivability of aircraft accidents to be considerably improved by delaying or preventing the onset of the above-mentioned hazards.

The use of air compressors and blowers for ventilating enclosed spaces such as manholes is already known and long established, for example from GB-1 191 393 and GB-A 2 008 740. The use of air compressors on board aircraft in the cabin pressurization equipment of the aircraft is also well-known and long established see, for example, GB-436 546, GB-534 523 and WO 85/04 149.

Additionally known, and under active development at the present time, are fire-emergency systems involving the supply of facemasks or smoke hoods to aircrew and passengers. See, for example, GB-A 2 125 534. Such masks have advantages and disadvantages, many of which will be self-evident.

US-A 4 311 198 discloses a method for providing fresh air to a building or other enclosure in the event of a fire, using a truck provided with a blower (33) and an extensible conduit (19) for supplying air under pressure from the blower to the enclosure through a suitable aperture in the wall thereof.

The method and apparatus of the present invention are not intended to replace other methods of combating aviation fire emergencies, but rather to compliment them.

According to the present invention there is provided a method of preventing or reducing injury to, or loss of life of, passengers and crew in an aircraft and preventing, reducing or delaying damage to the aircraft, in an emergency in which there is risk of damage, injury or death resulting from a fuel fire, which method comprises

- operably connecting to the aircraft a means of supplying air under pressure to the aircraft;
- said supply means being external to said aircraft;
- said aircraft being adapted to receive air supply from said supply means, and
- said aircraft being adapted to conduct said air supply to the interior of the aircraft: and
- supplying air under pressure to the interior from said supply means to ventilate said aircraft interior wherein at least part of the air supplied to the interior of the aircraft cabin is in the form of a mixture with water as fine droplets.

Also provided by the present invention is apparatus for use in a method of preventing or reducing injury to, or loss of life of, passengers and crew in an aircraft and preventing, reducing or delaying damage to the aircraft, in an emergency in which there is risk of damage, injury or death resulting from a fuel fire, which apparatus comprises

- connection means on board said aircraft adapted to be accessible from outside the aircraft to provide operable connection with a source of air under pressure exterior to the aircraft: and
- ducting means in the aircraft for conveying said air under pressure from outside the aircraft to the interior of the aircraft to ventilate said aircraft interior and means whereby at least part of the air supply to the interior of the aircraft cabin is in the form of a mixture with water as fine droplets.

It will be understood that the scope of the invention extends to aircraft whenever fitted with apparatus according to the invention.

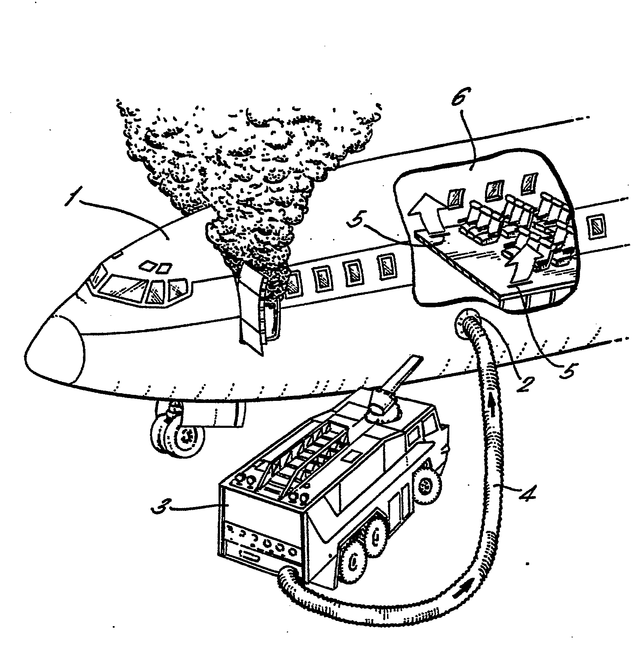

The drawing is a perspective view, partially in section of a method and apparatus of the invention in use.

Referring to the drawing, an aircraft 1 is equipped at 2 with operable connection means enabling a source of compressed air, in this case an airport rapid intervention fire vehicle 3 equipped with an air compressor, to be connected by means of the flexible conduit 4 to the connection means 2, and to supply air through vents 5 into the aircraft cabin 6.

It will be appreciated that the air supplied to the aircraft cabin could conveniently be supplied by means of the aircraft's own air-conditioning system, if the aircraft is fitted with an air-conditioning system. In this case the apparatus of the invention is operably connected to the ducting of the air-conditioning system. However, for the purpose of the present invention, it is desirable that air is supplied to the cabin at or near floor level and accordingly, if the aircraft cabin does not already possess vents at or near the floor of the cabin, the apparatus of the present invention preferably comprises such vents 5 operably connected to the ducting means of the apparatus to supply air under pressure at or near the floor of the aircraft cabin. Additionally, or alternatively, it may be desirable to supply air under pressure near one or more of the doors, windows and/or hatches of the cabin in which case the apparatus of the invention will include suitably-positioned vents operably connected to the ducting means of the apparatus. The reason or such positioning is that it is of course desirable to prevent or reduce the flow of smoke and noxious and poisonous fumes and gases into the cabin from outside through any doors, windows or hatches which are open or broken.

At least part of the air supplied to the interior of the aircraft cabin is in the form of a mixture with water as fine droplets, and to this end the apparatus of the invention may include a plurality of sprinkler heads positioned at the ceiling of the cabin. Each sprinkler head may be provided with heat sensor means to cause operation of such sprinkler head when a minimium temperature is reached. The purpose of supplying a water spray or mist to the interior of the aircraft cabin is not only to combat any conflagration which may already have started within the cabin but also to reduce or stabilise the temperature of the cabin, or at least reduce the rate at which the temperature may be rising, by virtue of the latent heat of the evaporation of the moisture. Thus the cabin environment may be maintained at a tolerable temperature level for a longer period of time, and the risk of flashover of fire to the interior of the cabin may be reduced or delayed.

It is a preferred feature of the method and apparatus of this invention that additional to and simultaneously with the supply of air to the aircraft cabin, any smoke or noxious fumes and gases which have ingressed are extracted from the aircraft cabin and to this end means may be provided, preferably in the form of vents at or near the ceiling of the cabin, for exhausting such smoke, fumes and gases from the cabin, being replaced ideally from the lower levels upwards by clean cold air from vents at or near floor level.

An embodiment of the apparatus of the invention which may enable the method of the present invention to be performed with rescue service vehicles situated outside the area of immediate danger or risk surrounding the aircraft comprises one or more enclosed flexible fire-resistant conduits, which conduits are adapted to be stowed on board the aircraft and to be deployed in the event of emergency so that one end of the conduit, herein referred to as the aircraft end, is operably connected to the aircraft and the other end of the conduit, herein referred to as the services end, is or may be disposed at a distance from the aircraft, so as to enable the transfer of substances, messages and/or electricity to and/or from the aircraft.

This form of apparatus may also comprise ejection means to enable the services end of the conduit to be ejected to a distance from the aircraft where it can be brought into use. The said ejection means may, for example, comprise a fire-resistant line or cable attached to the services end of the conduit and means being provided to propel said line or cable away from the aircraft, for example by means of a mechanical spring arrangement, gun, rocket or any other suitable means. A person or persons outside the aircraft could then pull said line or cable and the attached services end of the conduit to a position away from the aircraft, where the conduit can be brought into use. Alternatively, for example, the ejection means may comprise means adapted to urge the services end of the conduit itself away from the aircraft. Such means may also, of course, comprise the aforesaid mechanical spring means or one of the aforementioned explosive means, so that the rescue vehicle can be driven direct to the point where the services end of the conduit lands.

Since the accident may occur at night, or otherwise in conditions of poor visibility, for example occasioned by smoke emitted from a fire resulting from the accident, it is desirable that the services end of the conduit is provided with means for emitting light and/or sound so that it can be readily located by the rescue services.

Also it will be appreciated that it is desirable that the services end of the conduit is provided with a connector, preferably standardised, which is adapted to connect with a corresponding, preferably standardised, connector on a rescue vehicle or perhaps to an extension from the rescue vehicle, to enable transfer of the said substances, messages and/or electricity to and/or from the aircraft.

The apparatus of the invention preferably includes means for connecting the aircraft to a source of electricity outside the aircraft, and where the apparatus comprises the afore-mentioned conduit it is envisaged that the conduit may incorporate one or more electrical wires or cables. These may be advantageously used by being connected to one or more of the lighting, intercom, cabin air-conditioning system and/or cabin sound electrical systems of the aircraft. The aircraft electrical systems may have suffered damage as a result of the accident, or may have been deliberately disconnected in view of risk of causing a fire or explosion. It may be desirable therefore to be able independently to supply electrical power to the aircraft to supplement or replace one or more of the above mentioned electrical systems or any other system which may be installed in the aircraft, e.g. smoke extractors, on the basis that power may be available. Furthermore, it will readily be appreciated that, for example, it may be highly desirable to be able to give instructions to the occupants of the aircraft from outside, particularly in the event that some or all of the crew of the aircraft have been incapacitated. Additionally, the sustenance of the other electrical systems of the aircraft may prove to be vital in providing sufficient time for evacuation.

In the conduit form of the apparatus of the invention one or more of the conduits may be provided with at least two ducts for the passage of gases and/or liquids, so that two or more different fluids can be supplied to or removed from the aircraft simultaneously. This enables the conduit, for example, to simultaneously extract smoke, fumes and noxious gases from the cabin of the aircraft whilst supplying clean cool air and/or air/water mist through a second passageway to the cabin of the aircraft.

It is not essential however for the conduit to contain more than one duct. In fact it may be of advantage, for a number of reasons, if only one duct is used. For example, this enables the conduit to be of smaller cross-section and to be more easily manageable. The desirability of a return duct may be avoided if means are provided at or on board the aircraft for exhausting smoke and fumes overboard using the power of the incoming pressure air, for example by using a venturi or a turbine.

As has been mentioned previously, it is part of the concept of the present invention that fire, and the risk of fire, consequential to an aviation accident is tackled more actively, directly and simultaneously with any external attack on the fire by the rescue services, by means of equipment provided in the aircraft itself. To that end, the conduit of the apparatus of the present invention may be connected so as to supply inert gas, foam or other substances to voids in the fuel tanks and vents and/or engines of the aircraft so as to reduce the risk of fire, if it has not already occurred, or to reduce the risk of further spread of the fire or the risk of explosions of fuel-air mixtures in the interstices of the wings or engines of the aircraft, in particular surrounding the fuel tanks. It will be seen that in this way a further damage to the aircraft can be prevented or reduced, or at least delayed, in addition to the more important use of the invention in protecting life and reducing injuries by extending the evacuation time.

## Claims

1. A method of preventing or reducing injury to, or loss of life of, passengers and crew in an aircraft (1) and preventing, reducing or delaying damage to the aircraft (1) in an emergency in which there is risk of damage, injury or death resulting from a fuel fire, which method comprises
   - operably connecting to the aircraft (1) a means (3) of supplying air under pressure to the aircraft (1);
   - said supply means (3) being external to said aircraft (1);
   - said aircraft (1) being adapted to receive air supply from said supply means (3), and
   - said aircraft (1) being adapted to conduct said air supply to the interior (6) of the aircraft (1); and
   - supplying air under pressure to the interior (6) from said supply means (3) to ventilate said aircraft interior (6) wherein at least part of the air supplied to the interior (6) of the aircraft cabin is in the form of a mixture with water as fine droplets.

2. A method as claimed in claim 1 wherein the air is supplied to the interior (6) of the aircraft (1) at or near the floor of the cabin, and/or near one or more of the doors, windows and/or hatches of the aircraft.

3. A method as claimed in claim 1 or 2 wherein smoke and noxious fumes and gases are simultaneously extracted from the aircraft cabin (6) preferably at or near the ceiling of the cabin (6).

4. A method as claimed in any one of the preceding claims wherein simultaneously with the supply of air to the aircraft's cabin (6) the aircraft (1) is supplied with electricity from outside the aircraft (1) to operate one or more of the aircraft's electrically operated systems.

5. A method as claimed in any one of the preceding claims wherein simultaneously with the connection and supply of air to the aircraft's cabin (6) the aircraft's fuel tanks, fuel vents, engines and/or interstices of the aircraft's wings are supplied with an inert gas or liquid or a fire-retarding foam.

6. A method as claimed in any one of the preceding claims wherein an enclosed flexible fire-resistant conduit (4) is stored on board the aircraft and is deployed in the event of emergency so as to provide convenient means for connection to the source of air under pressure and/or other services required by the aircraft.

7. Apparatus for use in the method as claimed in claim 1, which apparatus comprises
   - connection means (2) on board said aircraft (1) adapted to be accessible from outside the aircraft (1) to provide operable connection with a source (3) of air under pressure exterior to the aircraft (1); and
   - ducting means in the aircraft for conveying said air under pressure from outside the aircraft (1) to the interior (6) of the aircraft (1) to ventilate said aircraft interior (6); and means whereby at least part of the air supply to the interior (6) of the aircraft cabin is in the form of a mixture with water as fine droplets.

8. Apparatus as claimed in claim 7 wherein the aircraft has an air-conditioning system and the apparatus is operably connected to the ducting of the air-conditioning system to supply air to the aircraft interior (6).

9. Apparatus as claimed in claim 7 or claim 8 wherein the apparatus comprises vents (5) operably connected to said ducting means and positioned at or near the floor of the aircraft cabin, and/or positioned at one or more doors, windows and/or hatches in the aircraft cabin.

10. Apparatus as claimed in any one of claims 7 to 9 which comprises a plurality of sprinkler heads positioned at the ceiling of the cabin (6), each sprinkler head optionally having heat sensor means to cause operation of such sprinkler head when a minimum temperature is reached.

11. Apparatus as claimed in any one of claims 7 to 10 including means for extracting smoke and noxious fumes and gases from the interior of the aircraft cabin (6) simultaneously with the supply of air under pressure to the cabin, the apparatus preferably comprising vents at or near the ceiling of the cabin (6).

12. Apparatus as claimed in any one of claims 7 to 11 wherein means are provided for operably connecting one or more of the aircraft's electrically operated systems to a source of electricity outside the aircraft (1).

13. Apparatus as claimed in any one of claims 7 to 12 including means for operably connecting the fuel tanks, fuel vents, engines and/or interstices of the aircraft's wings with a supply of inert gas or liquid or fire-retarding foam.

14. Apparatus as claimed in any one of claims 7 to 13;
- said connection means (2) comprising
- at least one enclosed flexible fire-resistant conduit (4)
- said conduit (4) being adapted to be stowed on board the aircraft and to be deployed in the event of emergency so that
- one end of the said conduit (4), herein referred to as the aircraft end, is operably connected to the aircraft (1) and
- the other end of said conduit (4), herein referred to as the services end, is capable of being disposed at a distance from the aircraft (1).

15. Apparatus as claimed in claim 14 further comprising ejection means for ejecting the servicing end of the conduit (4) to a distance from the aircraft (1), the ejection means preferably comprising a fire-resistant line or cable attached to the services end of the conduit (4) and means being provided to propel said line or cable to a distance from the aircraft (1) to enable a person or persons outside the aircraft to pull the services end of the conduit to a suitable position away from the aircraft (1) where the conduit (4) can be brought into use, or alternatively said ejection means preferably comprising means adapted to urge the services end of the conduit (4) itself away from the aircraft (1) to a suitable position relative to the aircraft (1) where the conduit (4) can be brought into use.

16. Apparatus as claimed in claim 14 or claim 15 wherein the said services end of the conduit (4) is provided with means for emitting light and/or sound.

17. Apparatus as claimed in any one of claims 14 to 16 wherein said services end of the conduit (4) is provided with a connector which is adapted to connect with a corresponding connector on or near a rescue vehicle to enable transfer of substances, messages and/or electricity to and/or from the aircraft (1).

18. Apparatus as claimed in any one of claims 14 to 17 wherein said conduit (4) incorporates one or more electrical wires or cables, and wherein said conduit (4) is preferably connected to one or more of the lighting, intercom, cabin air conditioning system, and/or cabin sound electrical systems of the aircraft (1).

19. Apparatus as claimed in any one of claims 14 to 18 wherein said conduit (4) is provided with at least two ducts for passage of gases and/or liquids, the conduit (4) preferably comprising a first passageway adapted for extracting smoke, fumes, and noxious gases from the cabin (6) of the aircraft (1) and a second passageway adapted for supplying clean air to the cabin (6) of the aircraft (1).

20. Apparatus as claimed in any of claims 14 to 18 in which said conduit (4) comprises a single duct and wherein means are provided to exhaust smoke and fumes overboard, said means being provided by the power of the air supplied through the conduit (4) to the aircraft (1).

21. Aircraft whenever fitted with apparatus as claimed in any one of claims 7 to 20.

**Patentansprüche**

1. Verfahren zum Verhindern oder Mildern von Verletzungen oder des Verlustes ihres Lebens von Passagieren und Besatzung in einem Luftfahrzeug (1) und zum Verhindern, Mildern oder Verzögern einer Beschädigung des Luftfahrzeugs (1) in einem Notfall, bei dem das Risiko von Beschädigung, Verletzung oder Tod aus einem Kraftstoffbrand besteht, wobei das Verfahren darin besteht,
- das Luftfahrzeug (1) betriebsmäßig mit einer Einrichtung (3) zum Versorgen des Luftfahrzeugs (1) mit Druckluft zu verbinden,
- die Versorgungseinrichtung (3) sich außerhalb des Luftfahrzeugs (1) befindet,
- das Luftfahrzeug (1) für den Empfang von Luftzufuhr von der Versorgungseinrichtung (3) ausgebildet ist, und
- das Luftfahrzeug (1) die Luftzufuhr in den Innenraum (6) des Luftfahrzeugs (1) zu leiten vermag, und
- von der Versorgungseinrichtung (3) Druckluft in den Innenraum (6) zur Lüftung des Luftfahrzeuginnenraums (6) zugeführt wird, wobei wenigstens ein Teil der in den Innenraum (6) der Luftfahrzeugkabine zugeführten Luft die Form eines Gemischs mit Wasser als feine Tröpfchen hat.

2. Verfahren nach Anspruch 1, bei dem die Luft zum Innenraum (6) des Luftfahrzeuges (1) an oder in der Nähe des Kabinenbodens und/oder in der Nähe einer oder mehrerer Türen, Fenster und/oder Luken des Luftfahrzeugs zugeführt wird.

3. Verfahren nach Anspruch 1 oder 2, bei dem Rauch und giftige Dämpfe und Gase aus der Luftfahrzeugkabine (6) vorzugsweise an oder in der Nähe der Decke der Kabine (6) zur gleichen Zeit abgeführt werden.

4. Verfahren nach einem der vorhergehenden Ansprüche, bei dem gleichzeitig mit der Zufuhr von Luft in die Luftfahrzeugkabine (6) das Luftfahrzeug (1) mit elektrischem Strom von außerhalb des Luftfahrzeugs (1) zum Betreiben einer oder mehrerer der elektrisch betriebenen Anlagen des Luftfahrzeugs versorgt wird.

5. Verfahren nach einem der vorhergehenden Ansprüche, bei dem gleichzeitig mit dem Anschließen an und dem Zuführen von Luft zur Luftfahrzeugkabine (6) den Kraftstoffbehältern, Kraftstoffentlüftern, Motoren und/oder Flügelzwischenräumen des Luftfahrzeugs ein inertes Gas oder eine inerte Flüssigkeit oder ein feuerhemmender Schaum zugeführt wird.

6. Verfahren nach einem der vorhergehenden Ansprüche, bei dem eine geschlossene, flexible, feuerfeste Leitung (4) an Bord des Luftfahrzeugs verstaut ist und in einem Notfall so in Betrieb genommen wird, daß ein zweckdienliches Mittel zum Anschließen an die Druckluftquelle und/oder andere vom Luftfahrzeug geforderte Funktionen geschaffen ist.

7. Vorrichtung zur Verwendung im Verfahren nach Anspruch 1 mit
- einer Anschlußeinrichtung (2) an Bord des Luftfahrzeugs (1), die von außerhalb des Luftfahrzeugs (1) zugänglich ist, derart, daß eine betriebsmäßige Verbindung mit einer Druckluftquelle (3) außerhalb des Luftfahrzeuges (1) herstellbar ist, und
- einer Rohrleitungsanlage im Luftfahrzeug zum Transportieren der Druckluft von außerhalb des Luftfahrzeugs (1) zum Innenraum (6) des Luftfahrzeugs (1) zum Lüften des Luftfahrzeuginnenraum (6); und einer Einrichtung, mit der wenigstens ein Teil der Luftzufuhr zum Innenraum (6) der Luftfahrzeugkabine die Form eines Gemischs mit Wasser als feine Tröpfchen hat.

8. Vorrichtung nach Anspruch 7, bei der das Luftfahrzeug eine Klimaanlage hat, und die Vorrichtung mit der Rohrleitungsanlage der Klimaanlage betriebsmäßig verbunden wird, um Luft dem Luftfahrzeuginnenraum (6) zuzuleiten.

9. Vorrichtung nach Anspruch 7 oder Anspruch 8, bei der die Vorrichtung Entlüftungseinrichtungen (5) aufweist, die mit der Rohrleitungsanlage betriebsmäßig verbunden und an oder in der Nähe des Bodens der Luftfahrzeugkabine und/oder an einer oder mehreren Türen, Fenstern und/oder Luken in der Luftfahrzeugkabine angeordnet sind.

10. Vorrichtung nach einem der Ansprüche 7 bis 9, mit einer Vielzahl von an der Decke der Kabine (6) angeordneten Sprinklerdüsen, von denen jede bei Bedarf eine Wärmefühleinrichtung aufweist, welche die Sprinklerdüse in Betrieb setzt, sobald eine Mindesttemperatur erreicht ist.

11. Vorrichtung nach einem der Ansprüche 7 bis 10, mit einer Einrichtung zum Abführen von Rauch und giftigen Dämpfen und Gasen vom Innenraum der Luftfahrzeugkabine (6) gleichzeitig mit der Zufuhr von Druckluft zur Kabine, wobei die Vorrichtung vorzugsweise Entlüftungseinrichtungen an oder in der Nähe der Decke der Kabine (6) aufweist.

12. Vorrichtung nach einem der Ansprüche 7 bis 11, bei der Einrichtungen zum betriebsmäßigen Anschließen eines oder mehrerer der elektrisch betriebenen Anlagen des Luftfahrzeugs an eine elektrische Stromquelle außerhalb des Luftfahrzeugs (1) vorgesehen sind.

13. Vorrichtung nach einem der Ansprüche 7 bis 12, mit einer Einrichtung zum betriebsmäßigen Verbinden der Kraftstoffbehälter, der Kraftstoffentlüfter, der Motoren und/oder von Zwischenräumen an den Luftfahrzeugflügeln mit einer Quelle von inertem Gas oder inerter Flüssigkeit oder feuerhemmendem Schaum.

14. Vorrichtung nach einem der Ansprüche 7 bis 13,
- bei der die Anschlußeinrichtung (2) umfaßt
- wenigstens eine geschlossene, flexible, feuerfeste Leitung (4),
- wobei die Leitung (4) an Bord des Luftfahrzeugs verstaubar ist und im Notfalle so in Betrieb nehmbar ist, daß
- ein Ende der Leitung (4), das hier als das luftfahrzeugseitige Ende bezeichnet wird, mit dem Luftfahrzeug (1) betriebsmäßig verbunden wird und
- das andere Ende der Leitung (4), das hier als das funktionsseitige Ende bezeichnet wird, im Abstand vom Luftfahrzeug (1) angeordnet werden kann.

15. Vorrichtung nach Anspruch 14, ferner mit einer Auswerfeinrichtung zum Auswerfen des funktionsseitigen Endes der Leitung (4) in eine Entfernung vom Luftfahrzeug (1), wobei die Auswerfeinrichtung vorzugsweise eine feuerfeste, am funktionsseitigen Ende der Leitung (4) befestigte Leine oder Kabel und Mittel zum Vorwärtstreiben der Leine oder des Kabels in eine Entfernung vom Luftfahrzeug (1) aufweist, damit eine oder mehrere Personen außerhalb des Luftfahrzeugs das funktionsseitige Ende der Leitung zu einer zweckdienlichen, vom Luftfahrzeug (1) entfernten Stelle ziehen können, von wo aus die Leitung (4) in Betrieb genommen werden kann, oder alternativ die Auswerfeinrichtung vorzugsweise mit Mitteln versehen ist, welche das funktionsseitige Ende der Leitung (4) selbst vom Luftfahrzeug (1) wegtreiben zu einer in bezug auf das Luftfahrzeug (1) zweckdienlichen Stelle, von wo aus die Leitung (4) in Betrieb genommen werden kann.

16. Vorrichtung nach Anspruch 14 oder Anspruch 15, bei der das funktionsseitige Ende der Leitung (4) mit Mitteln zum Aussenden von Licht und/oder Schall versehen ist.

17. Vorrichtung nach einem der Ansprüche 14 bis 16, bei der das funktionsseitige Ende der Leitung (4) mit einem Verbinder versehen ist, der mit einem entsprechenden Verbinder an oder in der Nähe eines Rettungsfahrzeuges verbindbar ist, damit Stoffe, Mitteilungen und/oder elektrischer Strom zu und/oder vom Luftfahrzeug (1) übertragen werden können.

18. Vorrichtung nach einem der Ansprüche 14 bis 17, bei welcher die Leitung (4) eine oder mehrere elektrische Leitungen oder Kabel einschließt, und bei der die Leitung (4) vorzugsweise an eine oder mehrere Elektroanlagen für Beleuchtung, Wechselsprechanlage, Kabinen-Klimaanlage und/oder Kabinenbeschallung des Luftfahrzeugs (1) verbunden ist.

19. Vorrichtung nach einem der Ansprüche 14 bis 18, bei der die Leitung (4) mit wenigstens zwei Rohrleitungen für den Durchlaß von Gasen und/oder Flüssigkeiten versehen ist, wobei die Leitung (4) vorzugsweise einen ersten Kanal zum Abführen von Rauch, Dämpfen und giftigen Gasen aus der Kabine (6) des Luftfahrzeugs (1) und einen zweiten Kanal zum Zuführen sauberer Luft zur Kabine (6) des Luftfahrzeugs (1) umfaßt.

20. Vorrichtung nach einem der Ansprüche 14 bis 18, bei der die Leitung (4) eine einzelne Rohrleitung aufweist, und bei der Mittel vorgesehen sind zum Abführen von Rauch und Dämpfen von Bord, wobei diese Einrichtung durch die Kraft der durch die Leitung (4) zum Luftfahrzeug (1) geförderten Luft gebildet ist.

21. Luftfahrzeug, wenn es mit einer Vorrichtung nach einem der Ansprüche 7 bis 20 ausgestattet ist.

## Revendications

1. Procédé pour empêcher ou réduire les blessures, ou les morts, de passagers et de membres d'équipage dans un aéronef (1) et pour empêcher, réduire ou retarder les dommages de l'aéronef (1) dans un cas d'urgence dans lequel il existe un risque de dommages, de blessures ou de morts résultant d'un feu de carburant, lequel procédé consiste
   - à relier fonctionnellement à l'aéronef (1) des moyens (3) de distribution à l'aéronef (1) d'air sous pression ;
   - lesdits moyens (3) de distribution étant extérieurs audit aéronef (1) ;
   - ledit aéronef (1) étant conçu pour recevoir une distribution d'air provenant desdits moyens (3) de distribution, et
   - ledit aéronef (1) étant conçu pour conduire ladite distribution d'air vers l'intérieur (6) de l'aéronef (1) ; et
   - à distribuer de l'air sous pression à l'intérieur (6) à partir desdits moyens (3) de distribution pour ventiler ledit intérieur (6) de l'aéronef, au moins une partie de l'air distribué à l'intérieur (6) de la cabine de l'aéronef étant sous la forme d'un mélange avec de l'eau en fines gouttelettes.

2. Procédé selon la revendication 1, dans lequel l'air est distribué à l'intérieur (6) de l'aéronef (1) au plancher de la cabine ou à proximité du plancher de la cabine, et/ou à proximité d'une ou plusieurs des portes, fenêtres et/ou écoutilles de l'aéronef.

3. Procédé selon la revendication 1 ou 2, dans lequel de la fumée et des vapeurs et gaz nocifs sont extraits simultanément de la cabine (6) de l'aéronef, avantageusement à ou à proximité du plafond de la cabine (6) ;

4. Procédé selon l'une quelconque des revendications précédentes, dans lequel, simultanément à la distribution d'air à la cabine (6) de l'aéronef, l'aéronef (1) est alimenté en électricité provenant de l'extérieur de l'aéronef (1) pour faire fonctionner un ou plusieurs des systèmes de l'aéronef fonctionnant électriquement.

5. Procédé selon l'une quelconque des revendications précédentes, dans lequel, simultanément à la liaison et la distribution d'air à la cabine (6) de l'aéronef, les réservoirs à carburant de l'aéronef, les évents et carburant, les moteurs et/ou les interstices des ailes de l'aéronef reçoivent un gaz inerte ou un liquide ou une mousse retardatrice du feu.

6. Procédé selon l'une quelconque des revendications précédentes, dans lequel un conduit fermé et flexible (4), résistant au feu, est rangé à bord de l'aéronef et est déployé en cas d'urgence afin de fournir un moyen commode pour une liaison sur la source d'air sous pression et/ou d'autres services demandés par l'aéronef.

7. Appareil à utiliser dans le procédé selon la revendication 1, lequel appareil comprend
   - des moyens (2) de liaison à bord dudit aéronef (1) conçus pour être accessibles depuis l'extérieur de l'aéronef (1) afin d'établir une liaison commandable avec une source (3) d'air sous pression extérieure à l'aéronef (1) ; et
   - des moyens de canalisation à l'intérieur de l'aéronef destinés à transporter ledit air sous pression de l'extérieur de l'aéronef (1) vers l'intérieur (6) de l'aéronef (1) pour ventiler ledit intérieur (6) de l'aéronef ; et des moyens par lesquels au moins une partie de la distribution d'air vers l'intérieur (6) de la cabine de l'aéronef est sous la forme d'un mélange avec de l'eau en fines gouttelettes.

8. Appareil selon la revendication 7, dans lequel l'aéronef comporte un système de conditionnement d'air et l'appareil est relié fonctionnellement aux canalisations du système de conditionnement d'air pour distribuer de l'air à l'intérieur (6) de l'aéronef.

9. Appareil selon la revendication 7 ou la revendication 8, dans lequel l'appareil comprend des évents (5) reliés fonctionnellement auxdits moyens de canalisations et placés au sol ou à proximité du sol de la cabine de l'aéronef, et/ou placés en une ou plusieurs portes, fenêtres et/ou écoutilles dans la cabine de l'aéronef.

10. Appareil selon l'une quelconque des revendications 7 à 9, qui comprend plusieurs têtes d'aspersion placées au plafond de la cabine (6), chaque tête d'aspersion comportant optionnellement un moyen de détection de chaleur destiné à mettre en fonctionnement une telle tête d'aspersion lorsqu'une température minimale est atteinte.

11. Appareil selon l'une quelconque des revendications 7 à 10, comprenant des moyens destinés à extraire de la fumée et des vapeurs et des gaz nocifs de l'intérieur de la cabine (6) de l'aéronef simultanément à la distribution d'air sous pression à la cabine, l'appareil comprenant avantageusement des évents au plafond ou à proximité du plafond de la cabine (6).

12. Appareil selon l'une quelconque des revendications 7 à 11, dans lequel des moyens sont prévus pour relier fonctionnellement un ou plusieurs des systèmes de l'aéronef fonctionnant électriquement à une source d'électricité extérieure à l'aéronef (1).

13. Appareil selon l'une quelconque des revendications 7 à 12, comprenant des moyens destinés à relier fonctionnellement les réservoirs à carburant, les évents à carburant, les moteurs et/ou des interstices des ailes de l'aéronef à une alimentation en gaz ou en liquide inerte ou en mousse retardatrice du feu.

14. Appareil selon l'une quelconque des revendications 7 à 13, dans lequel
- lesdits moyens (2) de liaison comprennent
- au moins un conduit fermé et flexible (4) résistant au feu
- ledit conduit (4) étant conçu pour être rangé à bord de l'aéronef et pour être déployé en cas d'urgence afin que
- une extrémité dudit conduit (4), appelée ici l'extrémité aéronef, soit reliée fonctionnellement à l'aéronef (1) et
- l'autre extrémité dudit conduit (4), appelée ici extrémité service, puisse être disposée à une certaine distance de l'aéronef (1).

15. Appareil selon la revendication 14, comprenant en outre des moyens d'éjection destinés à éjecter l'extrémité service du conduit (4) à une certaine distance de l'aéronef (1), les moyens d'éjection comprenant avantageusement une ligne ou un câble résistant au feu, relié à l'extrémité service du conduit (4), et des moyens étant prévus pour propulser ladite ligne ou ledit câble à une distance de l'aéronef (1), ce qui permet à une personne ou à plusieurs personnes extérieures à l'aéronef de tirer l'extrémité service du conduit jusqu'à une position convenable éloignée de l'aéronef (1) où le conduit (4) peut être mis en utilisation, ou bien, en variante, lesdits moyens d'éjection comprenant avantageusement des moyens conçus pour repousser l'extrémité service du conduit (4) lui-même à l'écart de l'aéronef (1) jusqu'à une position convenable par rapport à l'aéronef (1) où le conduit (4) peut être mis en utilisation.

16. Appareil selon la revendication 14 ou la revendication 15, dans lequel ladite extrémité service du conduit (4) est munie de moyens destinés à émettre de la lumière et/ou un son.

17. Appareil selon l'une quelconque des revendications 14 à 16, dans lequel ladite extrémité service du conduit (4) est munie d'un raccord qui est conçu pour être relié à un raccord correspondant sur ou à proximité d'un véhicule de secours afin de permettre un transfert de substances, de messages et/ou d'électricité vers, et/ou à partir de, l'aéronef (1).

18. Appareil selon l'une quelconque des revendications 14 à 17, dans lequel ledit conduit (4) comprend un ou plusieurs fils ou câbles électriques, et dans lequel ledit conduit (4) est avantageusement connecté à un ou plusieurs des systèmes d'éclairage, d'intercommunication, de conditionnement d'air de la cabine et/ou des systèmes électriques de sonorisation de la cabine de l'aéronef (1).

19. Appareil selon l'une quelconque des revendications 14 à 18, dans lequel ledit conduit (4) est pourvu d'au moins deux canaux pour le passage de gaz et/ou de liquides, le conduit (4) comprenant avantageusement un premier passage conçu pour extraire de la fumée, des vapeurs et des gaz nocifs de la cabine (6) de l'aéronef (1), et un second passage conçu pour fournir de l'air propre à la cabine (6) de l'aéronef (1).

20. Appareil selon l'une quelconque des revendications 14 à 18, dans lequel ledit conduit (4) comprend un seul canal et dans lequel des moyens sont prévus pour évacuer à l'extérieur de la fumée et des vapeurs, lesdits moyens étant fournis par la force de l'air distribué par le conduit (4) à l'aéronef (1).

21. Aéronef lorsqu'il est équipé de l'appareil selon l'une quelconque des revendications 7 à 20.